# EUROPEAN PATENT SPECIFICATION

(11) **EP 1 849 642 B1**
(45) Date of publication and mention of the grant of the patent: **30.06.2010**
(21) Application number: 07105749.1
(22) Date of filing: 05.04.2007
(51) Int. Cl.: B60K 13/02

(54) **Vehicle Air Intake Box Arrangement Structure**
Anordnungsstruktur für einen Lufteinlasskasten
Structure d'arrangement d'admission d'air d'un véhicule

(30) Priority: 28.04.2006 JP 2006126267
(43) Date of publication of application: 31.10.2007
(73) Proprietor: HONDA MOTOR CO., LTD., Tokyo 107-8556 (JP)
(72) Inventor: Seiji, Tatsuya, Saitama 351-0193 (JP); Fujihara, Kiyotaka, Saitama 351-0193 (JP); Nakanishi, Takafumi, Saitama 351-0193 (JP); Saito, Toshikazu, Saitama 351-0193 (JP)
(74) Representative: Rupp, Christian

(56) References cited:
- US-A- 5 199 521
- US-A- 5 284 115
- US-A- 5 947 219
- US-A1- 2002 023 792
- US-A1- 2003 015 361
- US-A1- 2006 065 231

## Description

The present invention relates to improvement of a vehicle air intake box arrangement structure.

There has been known a vehicle air intake box structure from US 2002 023792 (A1) which shows an all terrain or straddle type vehicle according to the preamble of claim 1, provided with an air intake system having an air intake pipe with reduced length. Also an inlet end of the air intake pipe is positioned so that the vehicle's capability for traversing water of a predetermined depth is improved. The height of the inlet end of the intake pipe is greater than the predetermined depth of the water to protect against water entering the air intake pipe due to encountering a water wave created in front of the vehicle that has a depth greater than the predetermined depth of the water. An air box is positioned just below a rear portion of the seatbackrest. Additionally, openings in rear fenders of the vehicle channel intake air to both a radiator/fan assembly and the air intake system. The openings of the rear fenders are preferably provided in the base portion of the seat.

Another vehicle air intake box structure has been known from Japanese Patent Document, Laid-Open No. Sho 61-200029, in which an air intake box is located above an engine housing chamber provided at the rear portion of a vehicle. As shown in Fig. 1 of Patent Document 1, an engine housing chamber 14 housing an engine 58 and final reduction gears 62 therein and a luggage chamber 22 located above the engine housing chamber 14 are arranged at the rear portion of a vehicle.

An air cleaner 80 is connected via a carburetor 78 to the engine 58. The air cleaner 80 is connected via a flexible duct 82 to a small chamber 26 located rearward of the luggage chamber 22.
The rear wall of the small chamber 26 is formed with slits 88, through which external air is introduced into the small chamber 26.

The small chamber 26 is located adjacently to and rearward of the luggage chamber 22; therefore, the increased capacity of the small chamber 26 reduces the capacity of the luggage chamber 22, for instance. In this way, the capacity of the small chamber 26 has an effect on the capacity of the luggage chamber 22. Thus, it is desirable to effectively use the unused space of a vehicle body to form the small chamber 26 in order not to affect the capacity of the luggage chamber 22.
In addition, air intake sound emitted into the small chamber 26 from an upper end opening of the flexible duct 82 tends to leak through the slits 88 to the outside.

It is an object of the present invention to effectively use the space of a vehicle body and to reduce air intake sound leaking to the outside.

The invention of claim 1 is characterized in that a vehicle includes an air intake box arrangement structure which comprises a power unit disposed at a rear portion of the vehicle, an air intake box for introducing outside air to the power unit, a seat with a seat cushion and a backrest separated from the seat cushion. Thereby the backrest is disposed rearward of the seat cushion and the air intake box is disposed at the back of the seat cushion and below the backrest. Furthermore a portion of the air intake box is disposed in a cavity formed inside the backrest, wherein an intake port of said air intake box is disposed in said cavity.

The function of the invention of claim 1 is as follows: Since the backrest is provided rearward of the seat, only support members supporting the backrest from below are present in the vicinity of the backrest, e.g., in a space rearward of the seat. It is difficult to use this space otherwise. Thus, the space can be effectively used by disposing the air intake box close to the rear portion of the seat. The space below the backrest is a dead space which is hard to use otherwise and therefore the space can be effectively used by disposing the air intake box at this space.
If the backrest uses a cushion material, air intake sound emitted from the air intake box is easily absorbed by the cushion material.
The cavity in the backrest is used as a space for housing the air intake box therein. If the backrest uses a cushion material, it is possible for the cushion material to face the cavity, which causes the cushion material to enhance the effect of absorbing the air intake sound of the air intake box. Further, since the cavity is formed in the backrest, the backrest is reduced in weight while the thickness of the cushion material of the backrest is ensured.

The invention of claim 2 is characterized in that the power unit is swingably attached to a vehicle body, the air intake box is attached to a portion of the vehicle body forward of the power unit, and the air intake box is connected to an air cleaner provided at an upper portion of the power unit.

The function of the invention of claim 2 is that the number of component parts of an air intake system attached to the power unit can be reduced compared with, for example, the case where the air intake box is provided close to the power unit. This can reduce the weight of the swinging portion.

The invention of claim 3 is characterized in that an intake port of the air intake box is disposed in the cavity.
The function of the invention of claim 3 is that the intake port of the air intake box is disposed in the cavity, which can make it hard for dirt and dust, and hot air from the power unit to enter the intake port. In addition, it becomes easier for the cushion material facing the inside of the cavity to absorb air intake sound emitted from the intake port.

The invention of claim 4 is characterized in that the air intake box is formed as an air intake resonator.
The function of the invention of claim 4 is that the air intake box itself formed as an air intake resonator reduces air intake sound while the cushion material provided for the backrest absorbs the air intake sound.

The invention of claim 5 is characterized in that an upper portion of said air intake box is provided with an intake port opening upward and obliquely forward, and said intake port is formed a rear portion of said upper portion of said air intake box with a protruding portion to function as an air intake resonator.

The invention of claim 6 is characterized in that said backrest comprises a bottom plate, a cushion material adhered to the bottom plate, and a skin covering the surface of said cushion material, and said bottom plate is a resin member having a plurality of perforations.

According to the invention of claim 1, the air intake box is disposed close to the rear portion of the seat. Since the air intake box can be disposed using the space close to the backrest, the unused space close to the air intake box can be effectively used.
If the backrest is provided with a cushion material, the cushion material serves as a sound absorbing material to reduce the air intake sound, which makes it hard for the air intake sound to leak to the outside.

Furthermore, since the air intake box is disposed below the backrest, the dead space below the backrest can be effectively used.

Moreover as a portion of the air intake box is disposed in a cavity formed inside the backrest, the cavity in the backrest is used to dispose the air intake box therein. Thus, the larger capacity of the air intake box can be ensured without wasting other spaces such as luggage storing box and the like. If the backrest is provided with a cushion material, the cushion material can effectively reduce air intake sound. Further, since the cavity is formed in the backrest, the backrest can be reduced in weight while ensuring the thickness of the cushion material of the backrest.

According to the invention of claim 2, the power unit is swingably attached to a vehicle body, the air intake box is attached to a portion of the vehicle body forward of the power unit, and the air intake box is connected to an air cleaner provided at an upper portion of the power unit. Therefore, the number of component parts of an air intake system attached to the power unit can be reduced compared with, for example, the case where the air intake box is provided close to the power unit. This can reduce the weight of the swinging portion.

According to the invention of claim 3, the intake port of the air intake box is disposed in the cavity, which can make it hard for dirt and dust, and hot air from the power unit to enter the intake port of the air intake box. In addition, it becomes easier for the cushion material of the air intake box to absorb air intake sound emitted from the intake port, which makes it hard for the air intake sound to leak to the outside.

According to the invention of claim 6, since the air intake box is formed as an air intake resonator, both the backrest side and the air intake box side can further reduce the air intake sound.

Best mode for carrying out the present invention will be below described with reference to the drawings. Note that the drawings should be viewed based on the direction of the reference numerals.

### Brief Description of the Drawings

Fig. 1 is a side view of a vehicle adopting an air intake box structure according to the present invention.
Fig. 2 is a side view of an essential portion of the vehicle according to the present invention.
Fig. 3 is a plan view of the vehicle of the present invention.
Fig. 4 is a side view (a portion of which is a cross-sectional view) illustrating a backrest and an air intake box of the present invention.
Fig. 5 is a front view of the air intake box according to the present invention.
Fig. 6 is a plan view of an attachment structure of the air intake box according to the present invention.
Fig. 7 is a side view illustrating the structure and attachment procedure of a side support member according to the present invention.
Fig. 8 is a plan view illustrating the structure and attachment procedure of the side support member according to the present invention.
Fig. 9 includes operational views illustrating the operation of an intake device according to the present invention.

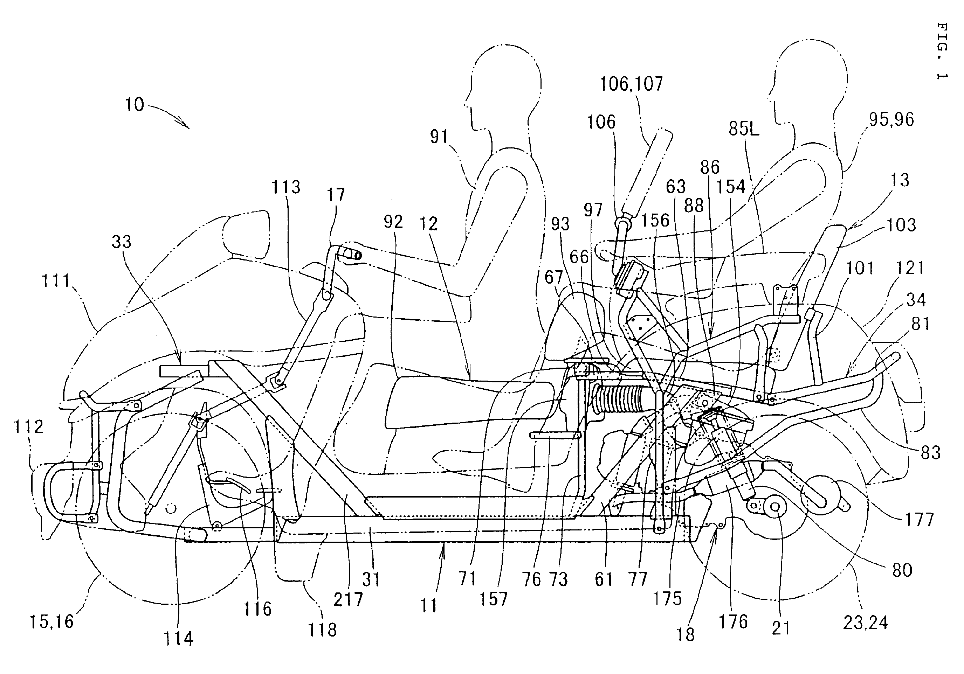

Fig. 1 is a side view of a vehicle adopting an air intake box arrangement structure according to the present invention. The vehicle, which is a four-wheeled vehicle, includes: a body frame 11 serving as a bone structure; a front seat 12 provided at an almost central portion of the body frame 11; and a rear seat 13 provided on the body frame 11 rearward of the front seat 12. The vehicle further includes: a pair of left and right front wheels 15, 16 attached to the front portion of the body frame 11; handlebars 17 operative to steer the front wheels 15, 16; a swing type power unit 18 attached up and down swingably to the rear portion of the body frame 11; and a pair of left and right rear wheels 23 and 24 attached to the power unit 18 via left and right axles 21 and 22 (only reference numeral 21 on the front side is shown), respectively.

The body frame 11 includes a pair of left and right side frames 31, 32 (only reference numeral 31 on the front side is shown) extending in the back and forth direction; a front frame 33 composed of a plurality of frame members provided at the front portion of the side frames 31, 32; and a rear frame 34 composed of a plurality of frame members provided at the rear portion of the side frames 31, 32.

The rear frame 34 includes: a pair of left and right rear slant frames 61 and 62 (only reference numeral 61 on the front side is shown) which extend rearward and obliquely upwardly from the side frame 31 and 32, respectively; a pair of left and right upper frames 63 and 64 attached to the upper ends of the rear slant frames 61 and 62, respectively; and an upper cross member 66 provided to be spanned between the front ends of the upper frames 63, 64. The rear frame 34 further includes: a left and right front extending frames 67, 68 (only reference numeral 67 on the front side is shown) extending forward from the upper cross member 66; support brackets 71 and 72 (only reference numeral 71 on the front side is shown) attached to the leading ends of the front extending frames 67 and 68, respectively; and a pair of left and right front upright frames 73 and 74 (only reference numeral 73 on the front side is shown) extending in the almost up and down direction and connected at the upper ends thereof to the leading ends of the front extending frames 67 and 68, respectively. The rear frame 34 further includes: a horizontal frame 76 horizontally attached to the respective intermediate portions of the front upright frames 73, 74; a pair of left and right reinforcing frames 77 and 78 (only reference numeral 77 on the front side is shown) spanned between the side frame 31 and the rear slant frame 61 and between the side frame 32 and the rear slant frame 62, respectively; and rear extending frames 81, 82 (only reference numeral 81 is shown) attached to the rear ends of the upper frames 63 and 64, respectively. The rear frame 34 further includes: rear sub frames 83 and 84 (only reference numeral 83 on the front side is shown) spanned between the rear end of the rear extending frame 81 and the intermediate portion of the reinforcing frame 77 and between the rear end of the rear extending frame 82 and the intermediate portion of the reinforcing frame 78, respectively; and a pair of left and right side support carrying frames 86 and 87 (only reference numeral 86 on the front side is shown) composed of a plurality of frame members and attached to the rear portions of the side frames 31 and 32 and to the upper frames 63 and 64, respectively, in order to support a pair of left and right side support members 85L, 85R (only reference numeral 85L on the front side is shown) attached to the rear seat 13.

Cushion upper support brackets 88, 88 (only reference numeral 88 on the front side is shown) supporting the upper ends of the rear cushion units 80 are respectively attached to joint portions between the rear slant frames 61 and the upper frame 63 and between the rear slant frame 62 and the upper frame 64.

The front seat 12 is a seat on which an operator 91 sits and includes a seat cushion 92 attached to the horizontal frame 76 and a backrest 93 attached to the horizontal brackets 71, 72 to support the low back of the operator 91.

The rear seat 13 is a seat on which two pillion passengers 95, 96 sit and includes a seat cushion 97 attached to an upper cross member 66 and to a rear cross member 222; and a seat back 103 attached to seat support frames 101 and 102 (only reference numeral 101 on the front side is shown) which extend upward from the rear extending frames 81 and 82, respectively, and to the side support carrying frames 86, 87.

The side support carrying frames 86, 87 include a pair of left and right stoppers 106, 107 adapted to restrict the vehicle forward movement of the pillion passengers 95 and 96, respectively. The solid line in the figure indicates the stoppers 106, 107 (only reference numeral 106 on the front side is shown) folded forward of the pillion passengers 95, 96. The imaginary line indicates the stoppers 106, 107 tipped up.

Reference numeral 111 denotes a front cover, 112 denotes a front lower fender, 113 denotes a dividable type steering shaft, 114 denotes a shift pedal, 116 denotes an accelerator pedal, 118 denotes a mud guard, and 121 denotes a rear cover.

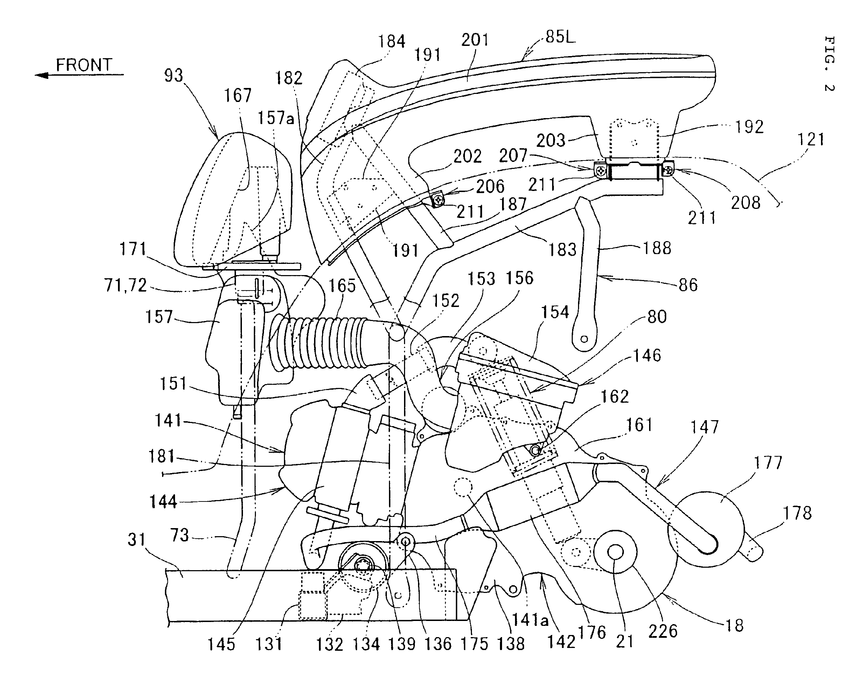

Fig. 2 is a side view of an essential portion of a vehicle according to the present invention (arrow "FRONT" denotes the front of the vehicle and the same holds true for the other drawings). A lower cross member 131 is spanned between left and right side frames 31, 32 (only reference numeral 31 on the front side is shown). A rubber bushing 134 is attached on its inner circumferential side to the lower cross member 131 via a bracket 132. A bracket 136 is attached to the outer circumferential side of the rubber bushing 134. A crankcase 138 of the power unit 18 is attached to the bracket 136. Thus, the power unit 18 is swingably attached to the side frames 31, 32. Incidentally, reference numeral 139 denotes a bolt used to fasten the rubber bushing 134 to the bracket 132.

The power unit 18 includes an engine 141 and a transmission 142 integrally attached to the rear portion of the engine 141. Incidentally, reference numeral 141a denotes a crankshaft of the engine 141.

The engine 141 is equipped with a cylinder portion 144, which is provided with a cylinder head 145. An intake device 146 and an exhaust device 147 are connected to the cylinder head 145.

The intake device 146 includes: an intake pipe 151 attached to the cylinder head 145; a throttle body 152 connected to the intake pipe 151; an air cleaner 154 connected through a connecting tube 153 to the throttle body 152; a bellows pipe 156 connected to the front portion of the air cleaner 154; an air intake box 157 connected to an end of the bellows pipe 156 to introduce outside air.

The air cleaner 154 is attached to a transmission case 161 of the transmission 142 with bolts 162 so as to be swung together therewith.
The bellows pipe 156 is provided with a bellows part 165 close to the air intake box 157 so as to be extensible and contractible.

The air intake box 157 is located close to the backrest 93. Specifically, an upper end 157a of the air intake box 157 is inserted into a cavity 167 provided in the backrest 93 while the other portions are located below the backrest 93. Incidentally, reference numeral 171 denotes a support plate attached to the support brackets 71, 72. The backrest 93 is attached to the support plate 171.

The exhaust device 147 includes: an exhaust pipe 175 whose one end is attached to the lower portion of the cylinder head 145; a catalyst 176 provided at the middle of the exhaust pipe 175; a muffler 177 attached to the other end of the exhaust pipe 175; and a tail pipe 178 attached to the muffler 177.

The side support carrying frame 86 includes: a lower frame 181 which is attached at its lower end to the side of the side frame 31; front and rear upper frames 182, 183 which are attached to the upper end of the lower frame 181 so as to be V-shaped as viewed from the side; a front upper bracket 184 attached to the end portion of the front upper frame 182; and an upper slant frame 187 spanned between the front and rear upper frames 182, 183. The side support carrying frame 86 further includes; a down frame 188 extending downward from the rear upper frame 183; a front attachment bracket 191 which is provided to be spanned between the front upper frame 182 and the upper slant frame 187 in order to attach the front portion of the left side support member 85L thereto; and a rear attachment bracket 192 which is attached to the rear end portion of the rear upper frame 183 in order to attach the rear portion of the left side support member 85L thereto. Incidentally, the side support carrying frame 87 (not shown) has the same basic structure as the side support carrying frame 86 described above; therefore, its explanation is omitted.
The front upper bracket 184 is adapted to swingably attach the above-mentioned stopper 106 (see Fig. 1) thereto.

The side support member 85L includes an arm rest portion 201 and front and rear leg portions 202, 203 both extending downward from both ends of the arm rest portion 201. The side support member 85L is made of a hollow resin member and divided into two left and right parts. The front and rear leg portions 202 and 203 are attached to the front and rear attachment brackets 191 and 192, respectively.

As described above, the front upper frame 182, the upper slant frame 187 and the front attachment bracket 191 are arranged in the front leg portion 202 while the rear attachment bracket 192 is arranged in the rear leg portion 203. On the other hand, the frame members are not arranged in the arm rest portion 201. Incidentally, reference numerals 206, 207, 208 denote coupling portions adapted to couple the left and right portions of the side support member 85L to each other with screws 211. The side support member 85R (not shown) has the same basic structure as the side support member 85L; therefore, its explanation is omitted.

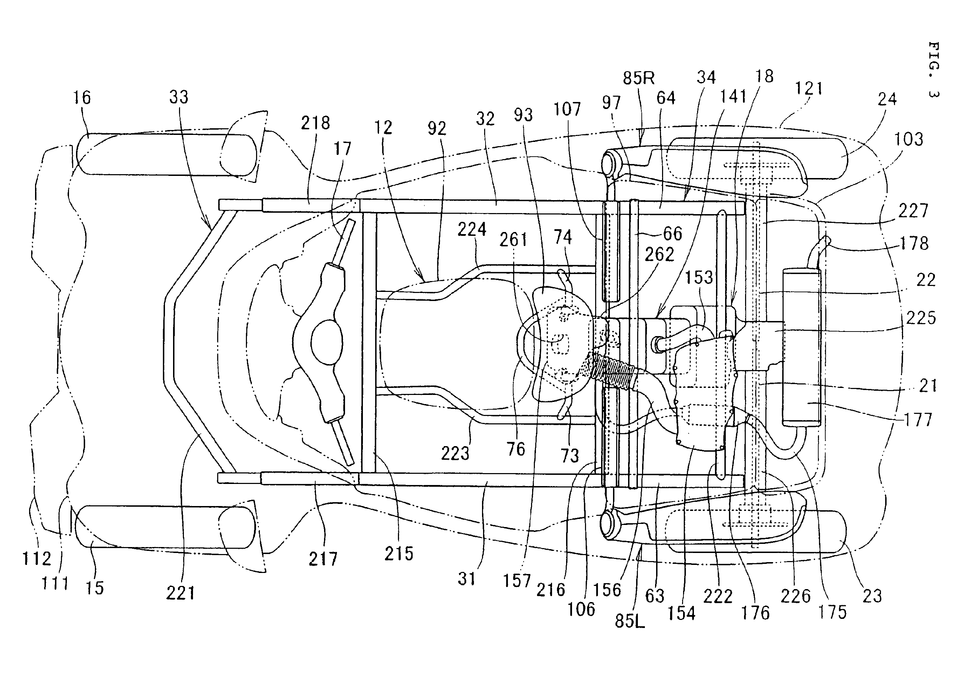

Fig. 3 is a plan view of the vehicle according to the invention. A first cross member 215 and a second cross member 216 are spanned between left and right side frames 31, 32. A dogleg front cross member 221 is spanned between a pair of left and right front slant frames 217, 218 provided at the front frame 33. A rear cross member 222 is spanned between the left and right upper frames 63, 64 of the rear frame 34. Incidentally, reference numerals 223, 224 denote a pair of left and right center frames spanned between the first cross member 215 and the second cross member 216.

As shown in Fig. 3, the seat cushion 92 of the front seat 12 is arranged at the almost central portion of the vehicle body. The backrest 93 of the front seat 12 is disposed arranged behind the seat cushion 92. The air intake box 157 is arranged below the backrest 93. The air cleaner 154 is connected to the rear portion of the air intake box 157 through the bellows pipe 156 extending almost rearward therefrom. The catalyst 176 is disposed at the middle of the exhaust pipe 175 extending in the back and forth direction. The muffler 177 extending widthwise is connected to the rear end of the exhaust pipe 175.

As shown in Fig. 3, the left and right stoppers 106, 107 are folded to be brought into the usage state. Axle pipes 226, 227 are integrally attached, from the left and right, respectively, to the final reduction gears 225 provided for the transmission 142 (see Fig. 2). The axles 21 and 22 extend leftward and rightward, respectively, from the final reduction gears 225 and are passed through axle pipes 226 and 227, respectively. The axles 21 and 22 are coupled at their ends to the rear wheels 23 and 24, respectively.

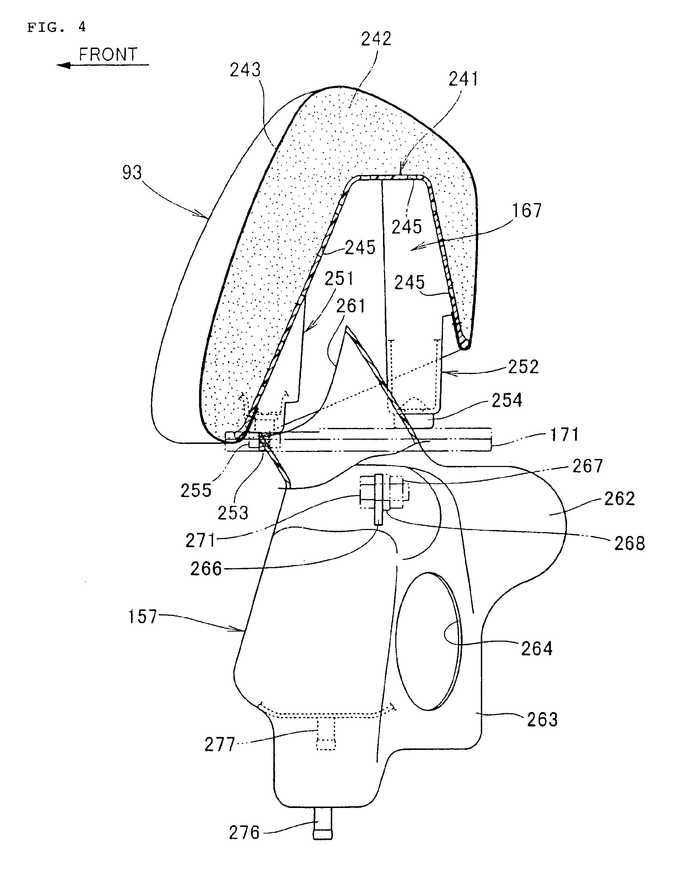

Fig. 4 is a side view (a portion thereof is a cross-sectional view) of the backrest 93 and the air intake box according to the invention. The backrest 93 is composed of a bottom plate 241, a cushion material 242 adhered to the bottom plate 241, and a skin 243 covering the surface of the cushion material 242.
The bottom plate 241 is a resin member formed with a plurality of perforations 245, which allow the cavity 167 defined by the concave bottom plate 241 to communicate with the cushion material 242.

In the figure, reference numerals 251, 252 denote downward projections formed integrally with the bottom plate 241. A bolt 253 is attached to the lower end of the downward projections 251 and a cushion rubber 254 is attached to the lower end of the other downward projections 252. The downward projections 251 are attached to the support plate 171 with the bolt 253 and a nut 255 threaded to the end of the bolt 253. Thus, the downward projection 252 is abutted against the upper surface of a body floor (not shown) through the cushion rubber 254.

The air intake box 157 is a container which is provided at its upper portion with an intake port 261 opening upward and obliquely forwardly and which is formed at its rear upper portion with an protruding portion 262 to provide a function as an air intake resonator to reduce air intake sound. In addition, a rear wall 263 of the air intake box 157 is formed with a connection hole 264 adapted to be connected to the bellows pipe 156 (see Fig. 3). Incidentally, reference numeral 266 denotes an attachment flange which is formed integrally with the air intake box 157 in order to be attached, with a bolt 271, to a stay 268 with a weld nut 267 provided on the body frame 11 (see Fig. 1).

As described above, the bottom plate 241 of the backrest 93 is formed with the perforation 245 and the intake port 261 of the air intake box 157 is arranged in the cavity 167 of the bottom plate 241. Thus, air intake sound emitted from the intake port 261 is absorbed by the cushion material 242 through the plurality of perforations 245.

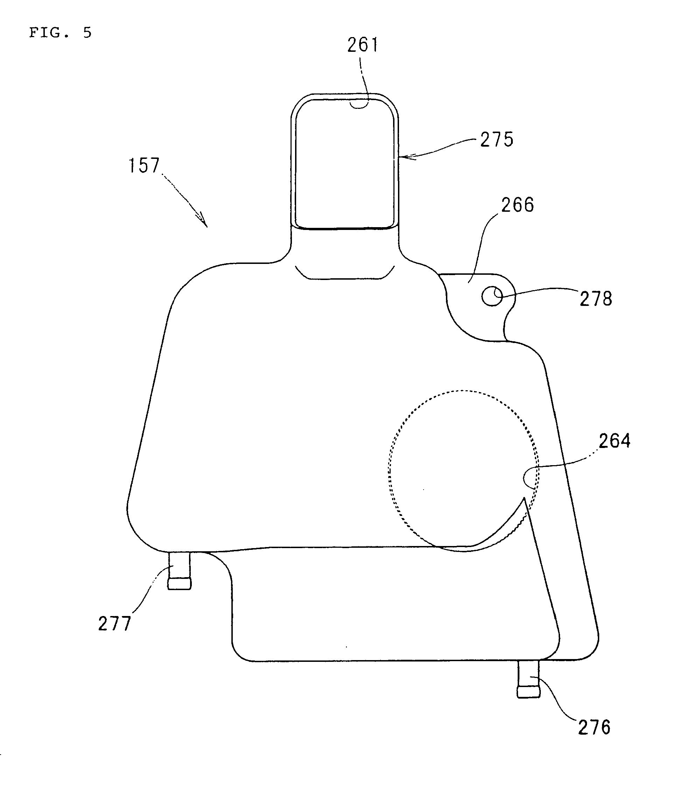

Fig. 5 is a front view of the air intake box according to the present invention. The air intake box 157 includes an air intake portion 275 projecting upward, an attachment flange 266 provided on the left side of the air intake portion 275, and connecting pipe portions 276, 277 projecting downward from the lower surface thereof.

The air intake portion 275 is provided with an air intake port 261. The connecting pipe portions 276, 277 are adapted to fix the air intake box 157 to the vehicle body. Incidentally, reference numeral 278 denotes an attachment hole bored in the attachment flange 266.

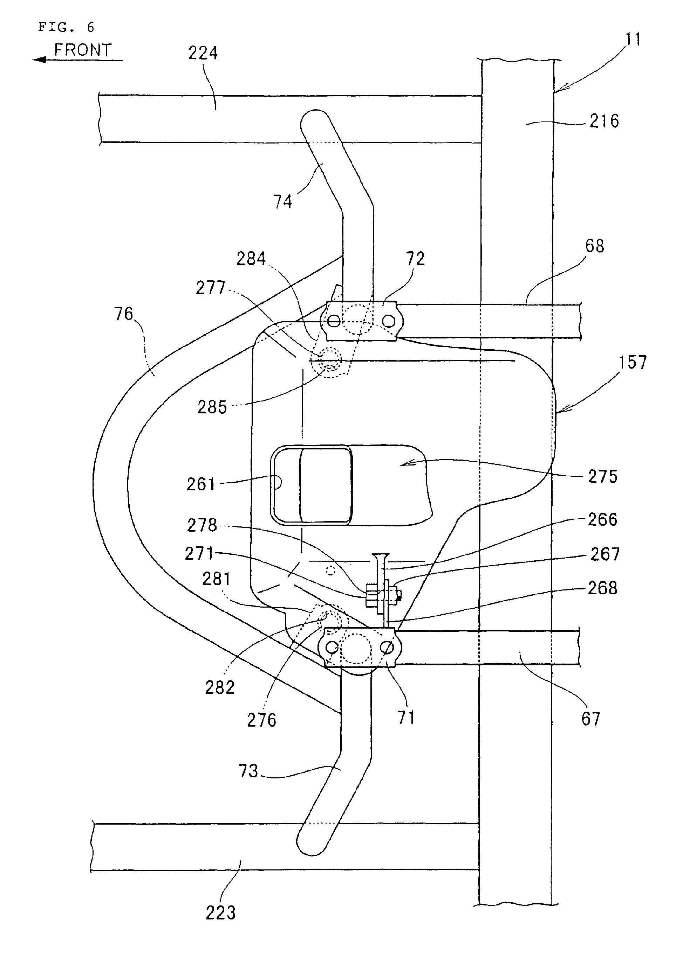

Fig. 6 is a plan view illustrating the attachment structure of the air intake box according to the present invention. The body frame 11, namely, the left support bracket 71 is attached with the stay 268 with the weld nut 267.
The left and right front upright frames 73 and 74 have lower ends attached to the center frames 223 and 224, respectively.

The V-shaped horizontal frame 76 is attached with a first sideward projecting stay 281 at a portion close to the connecting portion of the front upright frame 73. The first sideward projecting portion 281 is provided with a first positioning hole 282 adapted to position the lower portion of the air intake box 157.

The right front upright frame 74 is attached with a second sideward projecting stay 284 at its intermediate portion. The second sideward projecting stay 284 is provided with a second positioning hole 285 adapted to position the lower portion of the air intake box 157.

A description is next made of a procedure for attaching the air intake box 157 to the body frame 11.
The connecting pipe portions 276 and 277 of the air intake box 157 are inserted into the first positioning hole 282 of the first sideward projecting stay 281 and the second positioning hole 285 of the second sideward projecting stay 284, respectively.

Next, the attachment flange 266 is brought into contact with the stay 268 with the weld nut 267. The bolt 271 is inserted into the attachment hole 278 of the attachment flange 266 and threaded into the weld nut 267.
Thus, the positioning of the lower portion of the air intake box 157 and the attachment of the upper portion thereof with respect to the body frame 11 are completed.

As shown in Figs. 2, 4, and 6, the present invention is characterized in that in the vehicle 10 (see Fig. 1) including the air intake box 157 for introducing outside air provided for the power unit 18 disposed at the rear portion of the vehicle and a backrest 93 provided rearward of the front seat 12 (see Fig. 1), the air intake box 157 is disposed close to the rear portion of the front seat 12 and specifically the air intake box 157 is disposed below the bottom plate 241 of the backrest 93.

Thus, since the air intake box 157 is arranged using a space close to the backrest 93, an unused space close to the air intake box 157 can be effectively used.

If the backrest 93 is provided with the cushion material 242, the cushion material 242 serves as a sound absorbing material to reduce air intake sound. This makes it hard for the air intake sound to leak to the outside.

The present invention is characterized in that the air intake box 157 is disposed below the backrest 93.
This makes it possible to effectively use the dead space below the backrest 93.

In addition, the present invention is characterized in that a portion, namely, an upper portion of the air intake box 157 is disposed in the cavity 167 formed inside the backrest 93.
Thus, the air intake box 157 is effectively disposed using the cavity 167 in the air intake box 157, whereby the larger capacity of the air intake box 157 can be ensured.
If the backrest 93 is provided with the cushion material 242, the cushion material 242 can effectively reduce air intake sound. The backrest 93 is formed with the cavity 167; therefore, the backrest 93 can be reduced in weight while the thickness of the cushion material 242 of the backrest 93 is ensured.

Further, the present invention is characterized in that the power unit 18 is swingably attached to the vehicle body, the air intake box 157 is attached to a portion of the front body frame 11 forward of the power unit 18, that is, the air intake box 157 is attached to the support bracket 71 and positioned by the first and second sideward projecting stays 281, 282, and the air intake box 157 is connected to the air cleaner 154 provided at the upper portion of the power unit 18 via the bellows pipe 156 as a bellows-like pipe.

Thus, the number of component parts of an air intake system attached to the power unit 18 can be reduced compared with, for example, the case where the air intake box 157 is provided close to the power unit 18. This can reduce the weight of the swinging portion.

The bellows pipe 156 can make it hard for vibration to propagate from the power unit 18 to the air intake box 157. This can prevent the occurrence of noise in the air intake box 157 resulting from the vibration of the power unit 18.

The present invention is further characterized in that the intake port 261 of the air intake box 157 is disposed in the cavity 167.
This can make it hard for dirt and dust, and hot air from the power unit 18 to enter the intake port 261 of the air intake box 157. In addition, this can make it easier for the cushion material 242 of the air intake box 157 to absorb air intake sound emitted from the intake port 261, which makes it hard for the air intake sound to leak to the outside.

The present invention is further characterized in that the air intake box 157 is formed as an air intake resonator. Thus, both the backrest 93 and the air intake box 157 formed as the air intake resonator can further reduce the air intake sound.

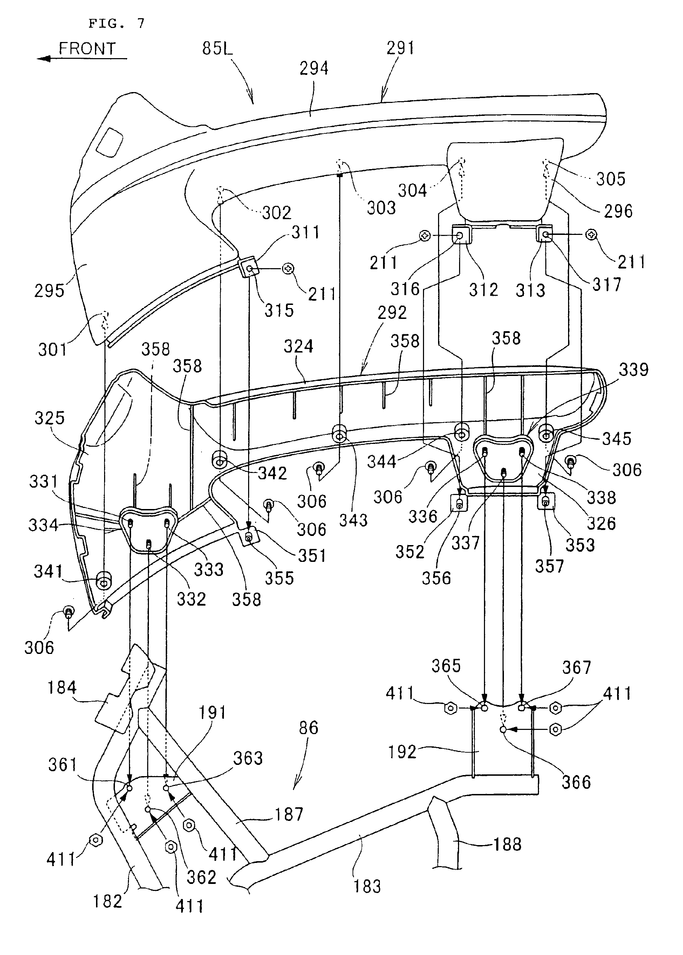

Fig. 7 is a side view illustrating the structure and attachment procedure of the side support member according to the present invention. The following describes the side support member 85L.
The side support member 85L is composed of a left half body 291 and a right half body 292. The left half body 291 includes a left arm rest half body 294; a left front leg portion half body 295 formed integrally with the left arm rest half body 294 so as to be forward thereof; and a left rear leg portion half body 296 formed integrally with the left arm rest half body 294 so as to be rearward thereof. Reference numerals 301 through 305 denote screw holes adapted to receive the tip of a screw 306 threaded therein. Reference numeral 311 denotes a mating portion provided at a rear corner portion of the left front left half body 295. Reference numerals 312, 313 denotes mating portions provided at the front corner portion and rear corner portion, respectively, of the left rear leg portion half body 296. Reference numerals 315, 316 and 317 denote screw insertion holes bored in the mating portions 311, 312 and 313, respectively, so as to receive screws 211 passed therethrough.

The right half body 292 is located closer to the center of the vehicle body than the left half body 291. The right half body 292 includes a right arm rest half body 324; a right front leg portion half body 325 formed integrally with the right arm rest half body 324 so as to be forward thereof; and a right rear leg portion half body 326 formed integrally with the right arm rest half body 324 so as to be rearward thereof.

The right front leg portion half body 325 is provided with a bolt fixing portion 334 attached with three bolts 331, 332 and 333. The right rear leg portion half body 326 is provided with a bolt fixing portion 339 attached with three bolts 336, 337 and 338. Reference numerals 341 to 345 denote screw insertion holes adapted to receive screws 306 passed therethrough. Reference numeral 351 denotes a mating portion located at the rear corner portion of the right front leg portion half body 325. Reference numerals 352 and 353 denote mating portions located at the front corner portion and rear corner portion, respectively, of the right rear leg half body 326. Reference numerals 355, 356 and 357 denote screw holes bored in the mating portions 351, 352 and 353, respectively, to receive the tips of the screws 211 threaded therethrough. Reference numerals 358 denote ribs which are formed integrally with the inner surface of the right half body 292 for reinforcement. Such ribs 358 are formed on the inner surface of the left half body 291.

The front attachment bracket 191 of the side support carrying frame 86 is provided with three bolt insertion holes361, 362 and 363. The rear attachment bracket 192 is provided with three bolt insertion holes 365, 366 and 367.

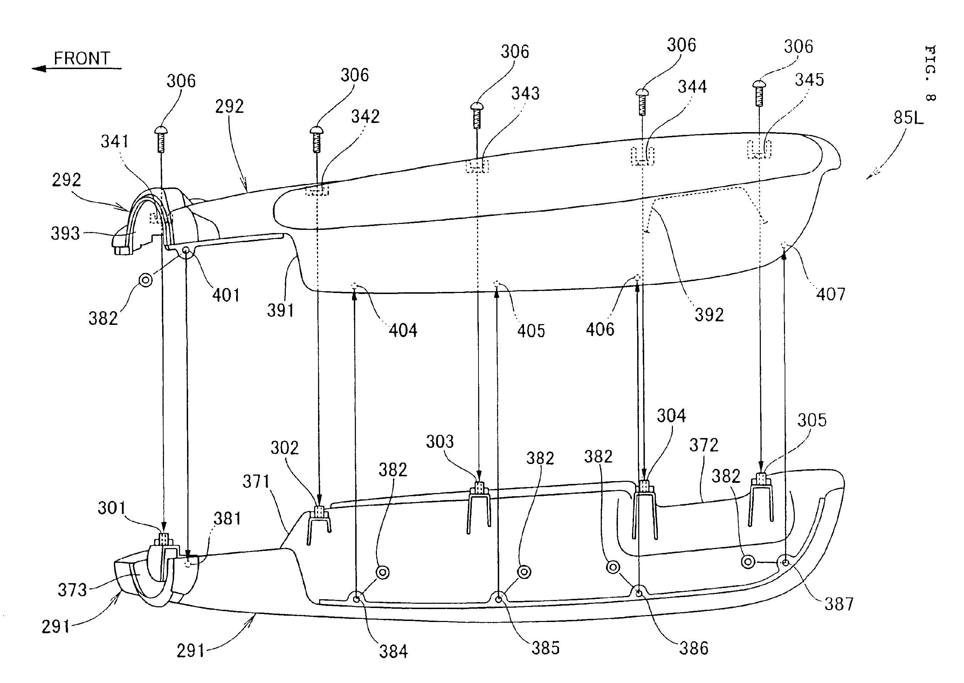

Fig. 8 is a plan view of the structure and attachment procedure of the side support member according tc the present invention. The left half body 291 includes a left front opening 371 and a left rear opening 372 adapted to receive the side support carrying frame 86 (see Fig. 7) passed therethrough toward the inside and a semicircular left opening 373 adapted to attach the stopper 106 (see Fig. 3) thereto. Reference numeral 381 denotes a screw hole adapted to receive the tip of a screw 382 threaded therein. Reference numerals 384 through 387 denote screw insertion holes adapted to receive screws 382 passed therethrough.

The right half body 292 includes a right front opening 391 and a right rear opening 392 adapted to receive the side support carrying frame 86 passed therethrough toward the inside and a semicircular right opening 393 adapted to attach the stopper 107 (see Fig. 3) thereto. Reference numeral 401 denotes a screw insertion hole adapted to receive a screw 382 passed therethrough. Reference numerals 404 through 407 denote screw holes adapted to receive the tips of the screws 382 threaded therethrough.

The assembly procedure of the side support member 85L is next described sequentially.
In Fig. 7, the bolts 331, 332 and 333 of the bolt fixing portion 334 of the right half body 292 are passed through the bolt insertion holes 361, 362 and 363, respectively, of the front attachment bracket 191. The bolts 336, 337 and 338 of the bolt fixing portion 339 of the right half body 292 are passed through the bolt insertion holes 365, 366 and 367, respectively, of the rear attachment bracket 192. Nuts 411 are each threaded to a corresponding one of the tips of the bolts 331 to 333 and 336 to 338. In this way, the right half body 292 is attached to the side support carrying frame 86.

In Fig. 8, the screws 382 are passed through the screw insertion holes 401 of the right half body 292 and through the screw insertion holes 384 to 387 of the left half body 291. The screws 382 are then threaded into the screw holes 381 of the left half body 291 and into the screw holes 404 to 407 of the right half body 292.

In Fig. 8, screws 306 are passed through the screw insertion holes 341 to 345 of the right half body 292 and the tips of the screws 306 are each threaded into a corresponding one of the screw holes 301 to 305 of the right half body 291 (see Fig. 7).

In Fig. 7, the screws 211 are passed through the respective screw insertion holes 315, 316 and 317 of the mating portion 311, 312 and 313 of the left half body 291. The tips of the screws 211 is then threaded into the respective screw holes 355, 356 and 357 of the mating portions 351, 352 and 353 of the right half body 292.

In this way, the assembly of the side support member 85L to the side support carrying frame 86 is completed. The side support member 85R (see Fig. 3) is assembled to the side support carrying frame 87 (not shown) in the same way.

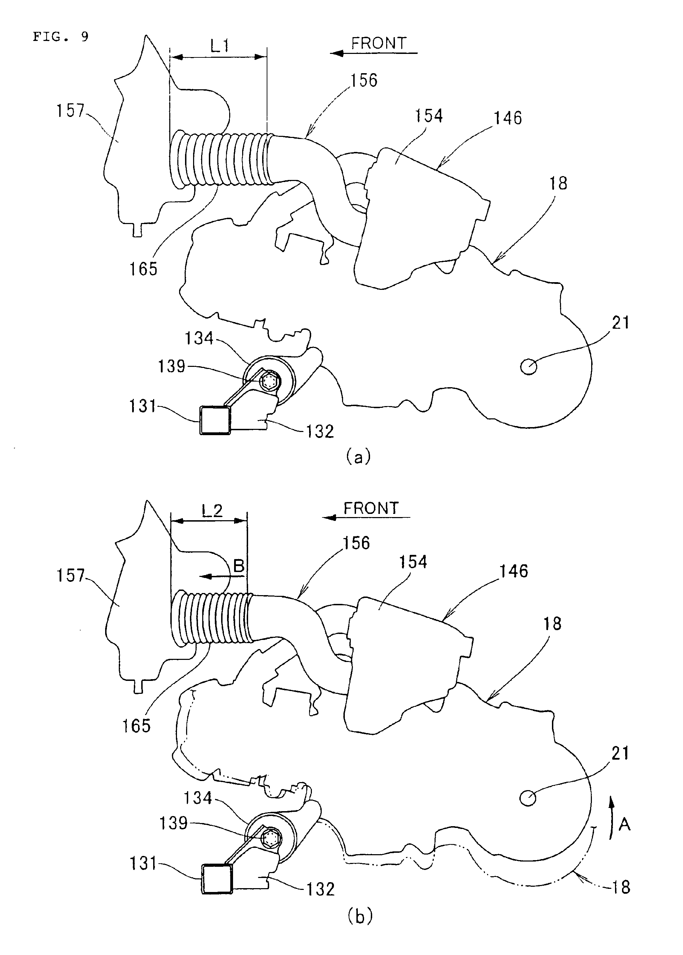

The operation of the air intake device 146 described above will be next described. Figs. 9(a) and 9(b) are operational diagrams illustrating the operation of the air intake device according to the present invention.
In Fig. 9(a), the power unit 18 is swingably supported via the bolt 139 by the bracket 132 attached to the side of the body frame 11 (see Fig. 1) (in actual, since the bolt 139 is integral with the inner circumference of the rubber bushing 134, the power unit 18 is swung while the rubber of the rubber bushing 134 is twisted around the bolt 139.) The bellows pipe 156 provided for the air intake device 146 connects the air cleaner 154 attached to the power unit 18 with the air intake box 157 attached to the side of the body frame 11. It is assumed that the length of the bellows part 165 of the bellows pipe 156 before the power unit is swung is L1.

Fig. 9(b) illustrates a state where the power unit 18 is swung in the direction of arrow A around the bolt 139. As the power unit 18 is swung, compressive force is applied to the bellows pipe 156 to compress the bellows part 165 in the direction of arrow B, resulting in a length of L2 (L2 < L1).

In Figs. 9(a) and 9(b), the bellows pipe 156 is disposed at a position above and near the bolt 139 around which the power unit 18 is swung. Compressive force is applied to but bending force is hardly at all applied to the bellows pipe 156 to elongate and contract the bellows part 165. Thus, the durability of the bellows pipe 156 can be enhanced.
The change of the sectional area of the bellows part 165 resulting from the swing of the power unit 18 is small. Therefore, intake resistance due to the undulation of the road surface is unlikely to change.

In the present embodiment, the bellows part 165 is formed at a portion of the bellows pipe 156 as shown in Fig. 2. However, the present invention is not limited to this embodiment. The bellows part 165 may be formed at the entire bellows pipe.

The air intake box arrangement structure of the present invention is suitable for motorcycles and four-wheeled vehicles provided with a unit swing mechanism which swingably support a power unit.
- 10: vehicle,
- 12: seat (front seat),
- 18: power unit,
- 93: backrest,
- 154: air cleaner,
- 156: pipe (bellows pipe),
- 157: air intake box,
- 167: cavity,
- 261: intake port.

## Claims

1. A vehicle (10) with an air intake box arrangement structure, comprising:
a power unit (18) disposed at a rear portion of the vehicle (10),
an air intake (157) box for introducing outside air to the power unit (18),
and a seat (12) with a seat cushion (92) **characterized by** a backrest (93) separated from the seat cushion (92),
wherein the backrest (93) is disposed rearward of the seat cushion (92), and
the air intake box (157) is disposed at the back of the seat cushion (92) and below the backrest (93), and
a portion of the air intake box (157) is disposed in a cavity (167) formed inside the backrest (93), wherein an intake port of said air intake box is disposed in said cavity.

2. The vehicle with an air intake box arrangement structure according to claim 1, wherein:
the power unit (18) is swingably attached to the vehicle body,
the air intake box (157) is attached to a portion of the vehicle body forward of the power unit (18), and
the air intake box (157) is connected to an air cleaner (154) provided at an upper portion of the power unit (18).

3. The vehicle with an air intake box arrangement structure according to claim 2, wherein an intake port (261) of the air intake box (157) is disposed in the cavity (167).

4. The vehicle with an air intake box arrangement structure according to any of the preceding claims, wherein the air intake box (157) is formed as an air intake resonator.

5. The vehicle with an air intake box arrangement structure according to any of the preceding claims,
wherein an upper portion of said air intake box is provided with an intake port opening upward and obliquely forward, and
wherein said intake port is formed a rear portion of said upper portion of said air intake box with a protruding portion to function as an air intake resonator.

6. The vehicle with an air intake box arrangement structure according to any of the preceding claims,
wherein said backrest comprises a bottom plate, a cushion material adhered to the bottom plate, and a skin covering the surface of said cushion material, and
wherein said bottom plate is a resin member having a plurality of perforations.

## Patentansprüche

1. Fahrzeug (10) mit einer Anordnungsstruktur für einen Lufteinlasskasten, das aufweist:
eine Antriebseinheit (18), die an einem hinteren Abschnitt des Fahrzeugs (10) angeordnet ist,
einen Lufteinlasskasten (157) zum Einleiten von Luft in die Antriebseinheit (18),
und einen Sitz (12) mit einem Sitzposter (92), **gekennzeichnet durch** eine Rückenlehne (93), die von dem Sitzpolster (92) getrennt ist,
wobei die Rückenlehne (93) hinter dem Sitzpolster (92) angeordnet ist, und der Lufteinlasskasten (157) auf der Rückseite des Sitzpolsters (92) und unterhalb der Rückenlehne (93) angeordnet ist, und
ein Abschnitt des Lufteinlasskastens (157) in einem Hohlraum (167) angeordnet ist, der im Inneren der Rückenlehne (93) ausgebildet ist, wobei ein Einlasskanal des Lufteinlasskastens in dem Hohlraum angeordnet ist.

2. Fahrzeug mit einer Anordnungsstruktur für einen Lufteinlasskasten gemäß Anspruch 1, wobei:
die Antriebseinheit (18) schwenkbar an der Fahrzeugkarosserie befestigt ist,
der Lufteinlasskasten (157) an einem Abschnitt der Fahrzeugkarosserie vor der Antriebseinheit (18) befestigt ist, und
der Lufteinlasskasten (157) mit einem Luftreiniger (154) verbunden ist, der an einem oberen Abschnitt der Antriebseinheit (18) bereitgestellt ist.

3. Fahrzeug mit einer Anordnungsstruktur für einen Lufteinlasskasten gemäß Anspruch 2, wobei ein Lufteinlasskanal (261) des Lufteinlasskastens (157) in dem Hohlraum (167) angeordnet ist.

4. Fahrzeug mit einer Anordnungsstruktur für einen Lufteinlasskasten gemäß einem der vorhergehenden Ansprüche, wobei der Lufteinlasskasten (157) als ein Lufteinlassresonator ausgebildet ist.

5. Fahrzeug mit einer Anordnungsstruktur für einen Lufteinlasskasten gemäß einem der vorhergehenden Ansprüche,
wobei ein oberer Abschnitt des Lufteinlasskastens aufwärts und schräg vorwärts mit einer Einlasskanalöffnung versehen ist, und
wobei der Einlasskanal als ein hinterer Abschnitt des oberen Abschnitts des Lufteinlasskastens mit einem vorstehenden Abschnitt ausgebildet ist, um als ein Lufteinlassresonator zu wirken.

6. Fahrzeug mit einer Anordnungsstruktur für einen Lufteinlasskasten gemäß einem der vorhergehenden Ansprüche,
wobei die Rückenlehne aufweist: eine unter Platte, ein Polstermaterial, das an der unteren Platte angebracht ist, und eine Verkleidung, die die Oberfläche des Polstermaterials bedeckt, und wobei die untere Platte ein Harzelement mit einer Vielzahl von Perforationen ist.

## Revendications

1. Véhicule (10) avec une structure d'agencement de boîtier d'admission d'air, comprenant :
un groupe moteur (18) disposé dans une partie arrière du véhicule (10),
un boîtier d'admission d'air (157) pour introduire de l'air extérieur dans le groupe moteur (18),
et un siège (12) avec un coussin de siège (92), **caractérisé par** un dossier (93) séparé du coussin de siège (92),
dans lequel le dossier (93) est disposé à l'arrière du coussin de siège (92), et
le boîtier d'admission d'air (157) est disposé derrière le coussin de siège (92) et en dessous du dossier (93), et
une partie du boîtier d'admission d'air (157) est disposée dans une cavité (167) formée à l'intérieur du dossier (93), dans lequel un orifice d'admission dudit boîtier d'admission d'air est disposé dans ladite cavité.

2. Véhicule avec une structure d'agencement de boîtier d'admission d'air selon la revendication 1, dans lequel :
le groupe moteur (18) est fixé de façon oscillante à la carrosserie de véhicule,
le boîtier d'admission d'air (157) est fixé à une partie de la carrosserie de véhicule à l'avant du groupe moteur (18), et
le boîtier d'admission d'air (157) est relié à un filtre à air (154) prévu dans une partie supérieure du groupe moteur (18).

3. Véhicule avec une structure d'agencement de boîtier d'admission d'air selon la revendication 2, dans lequel un orifice d'admission (261) du boîtier d'admission d'air (157) est disposé dans la cavité (167).

4. Véhicule avec une structure d'agencement de boîtier d'admission d'air selon une quelconque des revendications précédentes, dans lequel le boîtier d'admission d'air (157) est sous forme de résonateur d'admission d'air.

5. Véhicule avec une structure d'agencement de boîtier d'admission d'air selon une quelconque des revendications précédentes,
dans lequel une partie supérieure dudit boîtier d'admission d'air est pourvue d'un orifice d'admission ouvert vers le haut et obliquement vers l'avant, et
dans lequel ledit orifice d'admission est formé dans une partie arrière de ladite partie supérieure dudit boîtier d'admission d'air avec une partie saillante pour servir de résonateur d'admission d'air.

6. Véhicule avec une structure d'agencement de boîtier d'admission d'air selon une quelconque des revendications précédentes,
dans lequel ledit dossier comprend une plaque inférieure, un matériau de coussin collé à la plaque inférieure, et une enveloppe recouvrant la surface dudit matériau de coussin, et
dans lequel ladite plaque inférieure est un élément de résine possédant une pluralité de perforations.
